# EUROPEAN PATENT APPLICATION

(11) **EP 3 349 479 A1**
(43) Date of publication of application: **18.07.2018**
(21) Application number: 15904347.0
(22) Date of filing: 22.09.2015
(51) Int. Cl.: H04Q 11/00, H04L 29/06

(54) **OPTICAL NETWORK UNIT REGISTRATION METHOD, DEVICE AND SYSTEM**

(71) Applicant: Huawei Technologies Co., Ltd., Longgang District Shenzhen, Guangdong 518129 (CN)
(72) Inventor: GAO, Bo, Shenzhen Guangdong 518129 (CN); TAO, Minghui, Shenzhen Guangdong 518129 (CN)
(74) Representative: Pfenning, Meinig & Partner mbB
(86) International application number: PCT/CN2015/090298
(87) International publication number: WO 2017/049460

(57) **Abstract**

Embodiments of the present invention provide an optical network unit ONU registration method, an apparatus, and a system. The ONU registration method includes: scanning, by an ONU port, a downstream wavelength channel, where the ONU port is one of a plurality of ports on an ONU; receiving, by the ONU port, a discovery grant message from an optical line terminal OLT, where the discovery grant message includes a channel identifier of a downstream wavelength channel on which the discovery grant message is being transmitted; sending, by the ONU port, a register request message to the OLT, where the register request message includes a port number of the ONU port; and receiving, by the ONU port, a register message from the OLT, where the register message includes the port number of the ONU port and an ONU logical identifier allocated by the OLT to the ONU port. In the embodiments of the present invention, the ONU port receives a discovery grant from the OLT, sends a register request to the OLT, and receives, from the OLT, the ONU logical identifier allocated to the ONU port. This provides an efficient ONU registration mechanism, to perform ONU management and maintenance at a granularity of an ONU port, so that the ONU can support more bandwidth channels, and a bandwidth is increased.

## Description

### TECHNICAL FIELD

Embodiments of the present invention relate to optical communications technologies, and in particular, to an optical network unit registration method, an apparatus, and a system.

### BACKGROUND

As optical communications technologies rapidly develop, a passive optical network (Passive Optical Network, PON for short) system is more widely applied in the optical communications technologies. The PON system may include a time division multiplexing (Time Division Multiplexing, TDM for short) PON including a gigabit passive optical network (Gigabit Passive Optical Network, GPON for short) and a lOG-GPON, and an Ethernet passive optical network (Ethernet Passive Optical Network, EPON for short) and a lOG-EPON; and include a time wavelength division multiplexing (Time Wavelength Division Multiplexing, TWDM for short) PON, a point to point (Point to Point, PtP for short) PON, a wavelength division multiplexing (Wavelength Division Multiplexing, WDM for short) PON, and the like.

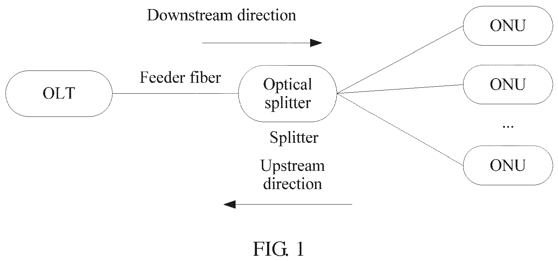

As shown in FIG. 1, for each type of PON system, the PON system may include: an optical line terminal (Optical Line Terminal, OLT for short) located at a central office, an optical distribution network (Optical Distribution Network, ODN for short) of a passive optical device, and an optical network unit (Optical Network Unit, ONU for short)/optical network terminal (Optical Network Terminal, ONT for short) located at a user end. The ONU may be used to represent the ONU and/or the ONT.

A TWDM PON system is a point-to-multipoint communications system. An optical line terminal (Optical Line Terminal, OLT) at a central office end in the TWDM PON system transceives data to/from user-side optical network units (Optical Network Unit, ONU) by using a plurality of wavelength channels, and each ONU works on one of the wavelength channels. In a downstream direction, the OLT broadcasts, by using a downstream wavelength corresponding to each of the wavelength channels, downstream data to the plurality of ONUs that work on the wavelength channels. In an upstream direction, an ONU on each wavelength channel may send, by using an upstream wavelength of the wavelength channel, upstream data to the OLT in a timeslot allocated by the OLT.

The GPON has relatively high bandwidth efficiency, still uses a conventional SDH as a synchronization timer mechanism, and uses GEM encapsulation to adapt to services of different rates. Therefore, the GPON is currently the most popular access system in operators in all countries. Based on a point-to-multipoint network structure of the GPON, one OLT communicates with a plurality of ONUs at the same time. To distinguish between different ONUs, a unique ONU-ID needs to be set for each ONU as an identifier of the ONU. When the plurality of ONUs send data to the OLT at the same time, a signal conflict may be caused, and normal sending by the OLT is affected. Therefore, the OLT needs to coordinate sending by the ONUs in a time slice grant manner, to ensure that only one ONU is allowed to send data in a specific time period, so as to effectively avoid a conflict. To ensure QoS of different services on an ONU, a plurality of allocation units need to be disposed, and each allocation unit is corresponding to service flows with the same traffic feature. Therefore, the OLT grants time slices to the allocation units on the ONU, and an Alloc-ID identifier is used.

EPON-related technologies and standards are developed on a basis of IEEE802.3. The EPON is compatible with common ETH technologies and devices, and may reuse a large quantity of existing mature devices and circuits. The EPON has low risk in design and implementation, relatively mature technologies and industry chains, and low costs. Therefore, the EPON is favored by Chinese telecommunications operators. Based on a point-to-multipoint network structure of the EPON, one OLT communicates with a plurality of ONUs at the same time. To distinguish between different ONUs, a unique LLID (Logical Link Identifier, logical link identifier) needs to be set for each ONU as an identifier of the ONU. Before normally communicating with the OLT, the ONU first needs to register. A registration process is mainly completed by exchanging an MPCP message. The OLT first delivers a specially-granted discovery gate, to ensure that all normal ONUs stop sending, thereby creating an idle time period (hereinafter referred to as a quiet window). A new registered ONU sends, in the quiet window, a registe_REQ MPCP message that carries a MAC address of the new registered ONU, and after the OLT receives the message, the OLT delivers an allocated LLID to the ONU by delivering a register MPCP message. The LLID is used to identify the ONU. Ranging between the OLT and the ONU is performed by using respective local timers of the OLT and the ONU and a timestamp carried in the MPCP, and therefore the OLT does not need to perform ranging grant independently. After the OLT receives a register_ACK MPCP message from the ONU, a whole registration process ends, and the ONU can normally communicate with the OLT.

In a common PON, an ONU has only one wavelength channel (one wavelength channel includes one downstream wavelength and one upstream wavelength), and in this case, a maximum bandwidth of the ONU is merely 10 Gbps. Currently, the industry puts forward a requirement that an ONU has a bandwidth of more than 10 G, and each ONU needs to have more than one wavelength channel. A technical problem that how to provide an efficient ONU registration mechanism to enable a single ONU to support more wavelength channels and increase a bandwidth needs to be urgently resolved.

### SUMMARY

Embodiments of the present invention provide a passive optical network communications method, an apparatus, and a system, to resolve an industrial technical problem about how to enable a port on an ONU to independently complete registration with an OLT, so as to increase a supported bandwidth and a quantity of supported wavelength channels of the ONU when the ONU needs a relatively large bandwidth.

An embodiment of the present invention provides an ONU registration method, including: scanning, by an ONU port, a downstream wavelength channel, where the ONU port is one of a plurality of ports on an ONU; receiving, by the ONU port, a discovery grant message from an optical line terminal OLT, where the discovery grant message includes a channel identifier of a downstream wavelength channel on which the discovery grant message is being transmitted; sending, by the ONU port, a register request message to the OLT, where the register request message includes a port number of the ONU port; and receiving, by the ONU port, a register message from the OLT, where the register message includes the port number of the ONU port and an ONU logical identifier allocated by the OLT to the ONU port.

An embodiment of the present invention further provides an ONU registration method, including: sending a discovery grant message to an ONU port, where the discovery grant message includes a channel identifier of a downstream wavelength channel on which the discovery grant message is being transmitted, and the ONU port is one of a plurality of ports on an ONU; receiving a register request message from the ONU port, where the register request message includes a port number of the ONU port; and sending a register message to the ONU port, where the register message includes the port number of the ONU port and an ONU logical identifier allocated to the ONU port.

An embodiment of the present invention further provides an ONU, including an ONU port, where the ONU port is one of a plurality of ports on the ONU, and the ONU port includes: a scanning module, configured to scan a downstream wavelength channel; and a transceiver module, configured to: receive a discovery grant message from an optical line terminal OLT, where the discovery grant message includes a channel identifier of a downstream wavelength channel on which the discovery grant message is being transmitted; send a register request message to the OLT, where the register request message includes a port number of the ONU port; and receive a register message from the OLT, where the register message includes the port number of the ONU port and an ONU logical identifier allocated by the OLT to the ONU port.

An embodiment of the present invention further provides a passive optical network device, including: a sending module, configured to send a discovery grant message to an ONU port, where the discovery grant message includes a channel identifier of a downstream wavelength channel on which the discovery grant message is being transmitted, and the ONU port is one of a plurality of ports on an ONU; and a receiving module, configured to receive a register request message from the ONU port, where the register request message includes a port number of the ONU port, where the sending module is further configured to send a register message to the ONU port, where the register message includes the port number of the ONU port and an ONU logical identifier allocated to the ONU port.

An embodiment of the present invention further provides a PON system, where the system includes an OLT and an ONU, the ONU includes an ONU port, the ONU port is one of a plurality of ports on the ONU, and the ONU port is configured to: scan a downstream wavelength channel; receive a discovery grant message from the OLT, where the discovery grant message includes a channel identifier of a downstream wavelength channel on which the discovery grant message is being transmitted; send a register request message to the OLT, where the register request message includes a port number of the ONU port; and receive a register message from the OLT, where the register message includes the port number of the ONU port and an ONU logical identifier allocated by the OLT to the ONU port.

In the embodiments of the present invention, the ONU port receives the discovery grant from the OLT, sends the register request to the OLT, and receives, from the OLT, the ONU logical identifier allocated to the ONU port. This provides an efficient ONU registration mechanism, to perform ONU management and maintenance at a granularity of an ONU port, so that the ONU can support more bandwidth channels, and a bandwidth is increased.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of a network architecture of a PON in the prior art;
FIG. 2 is a schematic diagram of a network architecture of a TWDM-PON according to an embodiment of the present invention;
FIG. 3 is a schematic diagram of a network architecture of an NG-EPON according to an embodiment of the present invention;
FIG. 4 is a flowchart of an ONU port registration method according to an embodiment of the present invention;
FIG. 5 is a flowchart of an ONU port registration method according to another embodiment of the present invention;
FIG. 6 is a structural diagram of an ONU according to an embodiment of the present invention;
FIG. 7 is a structural diagram of a PON system according to an embodiment of the present invention;
FIG. 8 is a flowchart of an ONU port registration method according to still another embodiment of the present invention; and
FIG. 9 shows a passive optical network device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

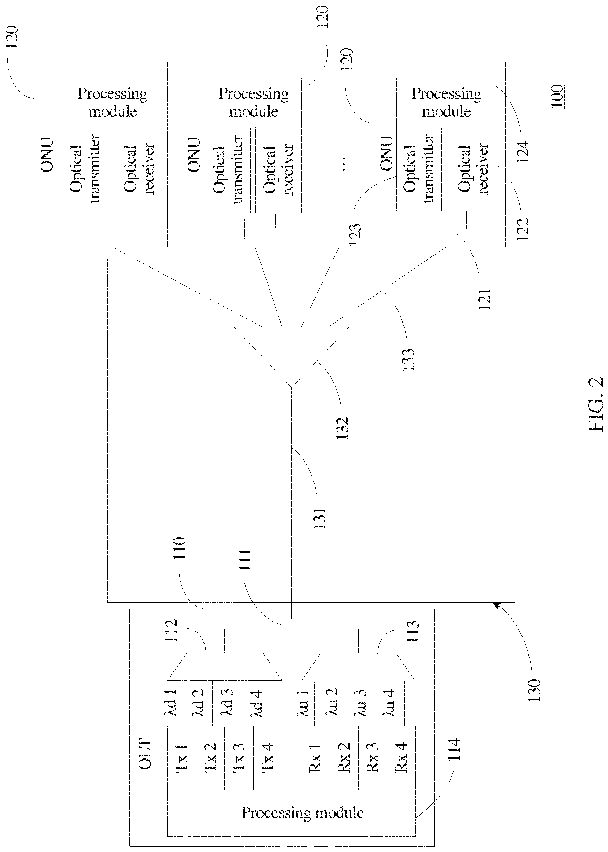

FIG. 2 is a schematic diagram of a network architecture of a TWDM-PON system. As shown in FIG. 2, the TWDM-PON system 100 includes one OLT 110, a plurality of ONUs 120, and an optical distribution network (Optical Distribution Network, ODN) 130, and the OLT 110 is connected to the plurality of ONUs 120 in a point-to-multipoint manner by using the ODN 130. The TWDM-PON system 100 may further include more than one OLT. The plurality of ONUs 120 share an optical transmission medium of the ODN 130. The ODN 130 may include a feeder fiber 131, an optical power splitter module 132, and a plurality of distribution fibers 133. The optical power splitter module 132 may be disposed on a remote node (Remote Node, RN). The optical power splitter module 132 is connected to the OLT 110 by using the feeder fiber 131, and is separately connected to the plurality of ONUs 120 by using the plurality of distribution fibers 133. In the TWDM-PON system 100, communications links between the OLT 110 and the plurality of ONUs 120 may include a plurality of wavelength channels, and the plurality of wavelength channels share the optical transmission medium of the ODN 130 in a WDM manner. Each ONU 120 may work on one of the wavelength channels in the TWDM-PON system 100, and each wavelength channel may carry a service of one or more ONUs 120. In addition, ONUs 120 that work on a same wavelength channel may share the wavelength channel in a TDM manner. In FIG. 2, that the TWDM-PON system 100 has four wavelength channels is used as an example for description. It should be understood that in actual application, a quantity of wavelength channels in the TWDM-PON system 100 may be set according to a network requirement.

For ease of description, in FIG. 2, the four wavelength channels in the TWDM-PON system 100 are respectively named as a wavelength channel 1, a wavelength channel 2, a wavelength channel 3, and a wavelength channel 4, and each wavelength channel uses a pair of upstream and downstream wavelengths. For example, an upstream wavelength and a downstream wavelength of the wavelength channel 1 may be respectively λu 1 and λd 1, an upstream wavelength and a downstream wavelength of the wavelength channel 2 may be respectively λu 2 and λd 2, an upstream wavelength and a downstream wavelength of the wavelength channel 3 may be respectively λu 3 and λd 3, and an upstream wavelength and a downstream wavelength of the wavelength channel 4 may be respectively λu 4 and λd 4. Each wavelength channel may have a corresponding wavelength channel identifier (for example, channel numbers of the four wavelength channels may be respectively 1, 2, 3, and 4), that is, a wavelength channel identifier has a matching relationship with upstream and downstream wavelengths of a wavelength channel identified by the wavelength channel identifier. The OLT 110 and ONUs 120 may obtain the upstream wavelength and the downstream wavelength of the wavelength channel according to the wavelength channel identifier.

The OLT 110 may include an optical coupler 111, a wavelength division multiplexer 112, a second wavelength division multiplexer 113, a plurality of downstream optical transmitters Tx 1 to Tx 4, a plurality of upstream optical receivers Rx 1 to Rx 4, and a processing module 114. The plurality of downstream optical transmitters Tx 1 to Tx 4 are connected to the optical coupler 111 by using the wavelength division multiplexer 112, the plurality of upstream optical receivers Rx 1 to Rx 4 are connected to the optical coupler 111 by using the second wavelength division multiplexer 113, and the coupler 111 is further connected to the feeder fiber 131 of the ODN 130.

Transmitter wavelengths of the plurality of downstream optical transmitters Tx 1 to Tx 4 are different from each other, and each of the downstream optical transmitters Tx 1 to Tx 4 may be corresponding to one wavelength channel in the TWDM-PON system 100. For example, the transmitter wavelengths of the plurality of downstream optical transmitters Tx 1 to Tx 4 may be respectively λd 1 to λd 4. The downstream optical transmitters Tx 1 to Tx 4 may separately transmit downstream data to corresponding wavelength channels by using the transmitter wavelengths λd 1 to λd 4 of the downstream optical transmitters Tx 1 to Tx 4, so that ONUs 120 that work on the corresponding wavelength channels receive the downstream data. Correspondingly, receiver wavelengths of the plurality of upstream optical receivers Rx 1 to Rx 4 may be different from each other, and each of the upstream optical receivers Rx 1 to Rx 4 is also corresponding to one wavelength channel in the TWDM-PON system 100. For example, the receiver wavelengths of the plurality of upstream optical receivers Rx 1 to Rx 4 may be respectively λu 1 to λu 4. The upstream optical receivers Rx 1 to Rx 4 may separately receive, by using the receiver wavelengths λu 1 to λu 4 of the upstream optical receivers Rx 1 to Rx 4, upstream data sent by ONUs 120 that work on the corresponding wavelength channels.

The wavelength division multiplexer 112 is configured to perform wavelength division multiplexing processing on the downstream data that is transmitted by the plurality of downstream optical transmitters Tx 1 to Tx 4 and whose wavelengths are respectively λd 1 to λd 4, and send the downstream data to the feeder fiber 131 of the ODN 130 by using the optical coupler 111, so as to provide the downstream data to the ONUs 120 by using the ODN 130. In addition, the optical coupler 111 may further be configured to provide the upstream data that is from the plurality of ONUs 120 and whose wavelengths are respectively λu 1 to λu 4 to the second wavelength division multiplexer 113, and the second wavelength division multiplexer 113 may demultiplex the upstream data whose wavelengths are respectively λu 1 to λu 4 to the upstream optical receivers Rx 1 to Rx 4 for data receiving.

The processing module 114 may be a media access control (Media Access Control, MAC) module. The processing module 114 may specify operating wavelength channels for the plurality of ONUs 120 by means of wavelength negotiation, and provide, according to an operating wavelength channel of an ONU 120, downstream data that is to be sent to the ONU 120 to one of the downstream optical transmitters Tx 1 to Tx 4 that is corresponding to the wavelength channel, so that the one of the downstream optical transmitters Tx 1 to Tx 4 transmits the downstream data to the corresponding wavelength channel. In addition, the processing module 114 may further perform upstream sending dynamic bandwidth allocation (Dynamic Bandwidth Allocation, DBA) for each wavelength channel, and allocate upstream sending timeslots to ONUs 120 that are multiplexed on a same wavelength channel in a TDM manner, to grant the ONUs 120 to send, in the specified timeslots, upstream data by using wavelength channels corresponding to the ONUs 120.

An upstream transmitter wavelength and a downstream receiver wavelength of each ONU 120 are adjustable, and the ONU 120 may respectively adjust, according to a wavelength channel specified by the OLT 110, the upstream transmitter wavelength and the downstream receiver wavelength of the ONU 120 to an upstream wavelength and a downstream wavelength of the wavelength channel, so as to send upstream data and receive downstream data by using the wavelength channel. For example, if the OLT 110 instructs, in a wavelength negotiation process, an ONU 120 to work on the wavelength channel 1, the ONU 120 may respectively adjust an upstream transmitter wavelength and a downstream receiver wavelength of the ONU 120 to the upstream wavelength λu 1 and the downstream wavelength λd 1. If the OLT 110 instructs an ONU 120 to work on the wavelength channel 3, the ONU 120 may respectively adjust an upstream transmitter wavelength and a downstream receiver wavelength of the ONU 120 to the third upstream wavelength λu 3 and the downstream wavelength λd 3.

The ONU 120 may include an optical coupler 121, a downstream optical receiver 122, an upstream optical transmitter 123, and a processing module 124. The downstream optical receiver 122 and the upstream optical transmitter 123 are connected, by using the optical coupler 121, to a distribution fiber 133 corresponding to the ONU 120. The optical coupler 121 may provide upstream data sent by the upstream optical transmitter 123 to the distribution fiber 133 of the ODN 130, to send the upstream data to the OLT 110 by using the OND 130. In addition, the optical coupler 121 may further provide downstream data sent by the OLT 110 by using the ODN 130 to the downstream optical receiver 122 for receiving.

The processing module 124 may be a MAC module. The processing module 124 may perform wavelength negotiation with the OLT 110, and adjust a receiver wavelength of the downstream optical receiver 122 and a transmitter wavelength of the upstream optical transmitter 123 (that is, adjust the downstream receiver wavelength and the upstream transmitter wavelength of the ONU 120) according to the wavelength channel specified by the OLT 110, so that the ONU 120 works on the wavelength channel specified by the OLT 110. In addition, the processing module 124 may further control, according to a dynamic bandwidth allocation result of the OLT 110, the upstream optical transmitter 123 to send upstream data in a specified timeslot.

During running of the TWDM-PON system 100, if there is a large quantity of ONUs 120 getting online, an ideal case is as follows: Some ONUs 120 work on the wavelength channel 1, some ONUs 120 work on the wavelength channel 2, some ONUs 120 work on the wavelength channel 3, and some ONUs 120 work on the wavelength channel 4; and quantities of ONUs 120 that work on the wavelength channels are basically equal.

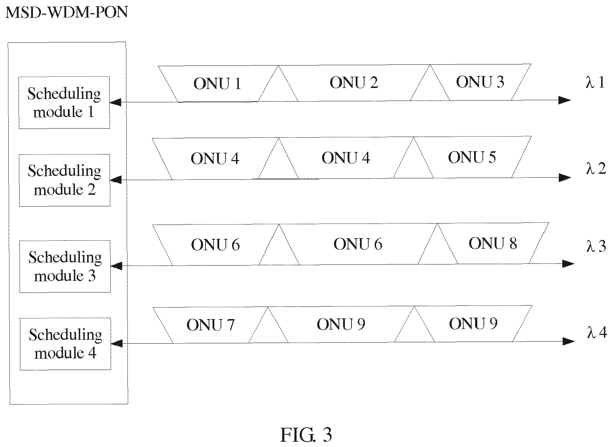

As shown in FIG. 3, in a common NG-EPON architecture, a PON system has four wavelength channels in total. On an OLT side, each wavelength channel is corresponding to one independent bandwidth scheduling module, for example, scheduling modules 1, 2, 3, and 4 in an OLT in FIG. 3A, and each ONU is corresponding to one wavelength channel. ONUs 1 to 3 work on a λ 1 wavelength channel, ONUs 4 and 5 work on a λ 2 wavelength channel, an ONU 6 and an ONU 8 work on a λ 3 wavelength channel, and an ONU 7 and an ONU 9 work on a λ 4 wavelength channel. FIG. 3 is a timeslot diagram of working of ONUs, and each trapezoidal block represents one timeslot. On the λ 1 wavelength channel, the OLT allocates three timeslots of different lengths to the ONUs 1 to 3; on the λ 2 wavelength channel, the OLT allocates more upstream timeslots to the ONU 4. Similarly, on the λ 3 wavelength channel, the OLT allocates more upstream timeslots to the ONU 6; and on the λ 4 wavelength channel, the OLT allocates more timeslots to the ONU 9. In this architecture, a wavelength is registered in a unit of an ONU, an ONU works on a corresponding wavelength channel, and the OLT allocates a timeslot to the ONU. Consequently, management and maintenance cannot be finely performed.

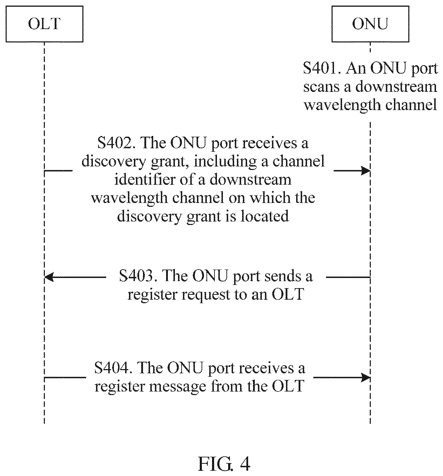

FIG. 4 is a flowchart of an ONU port registration method according to an embodiment of the present invention. An ONU port registration process includes the following steps.

S401. An ONU port scans a downstream wavelength channel, where the ONU port is one of a plurality of ports on an ONU.

When the ONU is powered on and initialized, each port on the ONU scans a downstream wavelength signal, to initialize and calibrate the downstream wavelength channel. The ONU port is a port on a PON side, and is specifically a port that is on the ONU and that connects to and communicates with a port on an OLT PON side by using an ODN.

S402. The ONU port receives a discovery grant message from the OLT, where the discovery grant message includes a channel identifier of a downstream wavelength channel on which the discovery grant is located.

In this embodiment of the present invention, a message exchanged between the ONU port and the OLT may be a message based on a Multi-Point Control Protocol (Multiple Point Control Protocol, MPCP), or may be a message based on operation, administration and maintenance (Operation Administration Maintenance, OAM), or may be a message based on physical layer operation, administration and maintenance (Physical Layer Operation Administration Maintenance, PLOAM), or may be a message based on an operation management control interface (Operation Management Control Interface, OMCI), or has a self-defined message format. Herein, the discovery grant message received by the ONU port from the OLT may be specifically a gate (gate) MPCP message. The gate MPCP message may include not only the channel identifier of the downstream wavelength channel, but also a port number of the ONU port.

S403. The ONU port sends a register request to the OLT, where the register request includes a port number of the ONU port.

In a case, each ONU port on the ONU may send a register request to the OLT. In another case, the ONU selects a default ONU port to perform registration, and only the selected default ONU port sends a register request to the OLT. In another case, the ONU port that sends the register request may be specified by the OLT. The specified ONU port has previously registered with the OLT, and the OLT may specify, by using the port number of the ONU port that is carried in the gate MPCP message in step S402, the ONU port that needs to send the register request to the OLT.

The ONU may store a correspondence between the channel identifier of the downstream wavelength channel and a channel identifier of an upstream wavelength channel, the downstream wavelength channel and the upstream wavelength channel form a wavelength channel group, and the sending, by the ONU port, a register request message to the OLT may include: sending, by the ONU port, the register request message to the OLT by using the upstream wavelength channel.

S404. The ONU port receives a register message from the OLT, where the register message includes the port number of the ONU port and an ONU logical identifier allocated by the OLT to the ONU port.

After receiving, from the OLT, the ONU logical identifier allocated to the ONU port, the ONU port may further send a register response message to the OLT. The register response message is used to instruct the OLT to confirm whether the ONU logical identifier is allocated to the ONU port, and the register response message includes the port number of the ONU port.

When the ONU on which the ONU port is located is an ONU in a GPON, the ONU logical identifier may be specifically an ONU ID. When the ONU on which the ONU port is located is an ONU in an EPON, the ONU logical identifier may be specifically an LLID.

In this embodiment of the present invention, the ONU port receives the discovery grant from the OLT, sends the register request to the OLT, and receives, from the OLT, the ONU logical identifier allocated to the ONU port. This provides an efficient ONU registration mechanism, so that the ONU can support more bandwidth channels, and a bandwidth is increased.

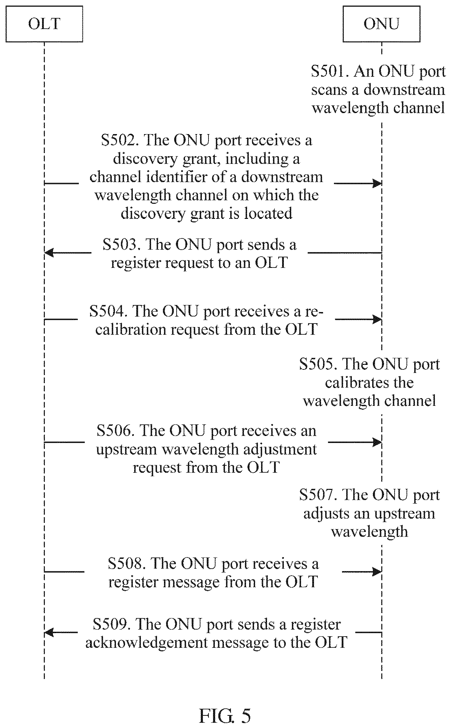

FIG. 5 is a flowchart of an ONU port registration method according to another embodiment of the present invention. An ONU port registration process includes the following steps.

S501. An ONU port scans a downstream wavelength channel, where the ONU port is one of a plurality of ports on an ONU.

When the ONU is powered on and initialized, each port on the ONU scans a downstream wavelength signal, to initialize and calibrate the downstream wavelength channel. The ONU port may be a wavelength channel terminal that is on a PON side and that communicates with an OLT PON port.

S502. The ONU port receives a discovery grant message from the OLT, where the discovery grant message includes a channel identifier of a downstream wavelength channel on which the discovery grant is located.

In this embodiment of the present invention, a message exchanged between the ONU port and the OLT may be a message based on a Multi-Point Control Protocol (Multiple Point Control Protocol, MPCP), or may be a message based on operation, administration and maintenance (Operation Administration Maintenance, OAM), or may be a message based on physical layer operation, administration and maintenance (Physical Layer Operation Administration Maintenance, PLOAM), or may be a message based on an operation management control interface (Operation Management Control Interface, OMCI), or has a self-defined message format. Herein, the discovery grant message received by the ONU port from the OLT may be specifically a gate MPCP message. The gate MPCP message may include not only the channel identifier of the downstream wavelength channel, but also a port number of the ONU port. Herein, an MPCP message is used as an example to describe a format of information exchanged between the ONU port and the OLT. A format of the MPCP message may be as follows:

**Table 1**

| **Field name** | **Occupied byte** |
|---|---|
| Destination address | 6 |
| Source address | 6 |
| Length/Type | 6 |
| Operation code | 6 |
| Timestamp | 4 |
| Data/Reserved field | 40 |
| Frame check sequence | 4 |

Table 1 shows a frame format of an existing MPCP protocol. The destination address (Destination Address, DA) occupies six bytes, and is used to mark an IP address to which the packet is sent.

The source address (Source Address, SA) occupies six bytes, and is used to mark an IP address from which the packet is sent.

The packet length/type (Length/Type) occupies two bytes, and is used to mark a length and a type of the packet.

The operation code (Opcode) occupies two bytes, and is used to mark a number of the MPCP frame.

The timestamp (TimeStamps) occupies four bytes, and is used to mark a time at which the packet is sent.

The data information/reserved field (Data/Reserved/Pad) occupies 40 bytes, and is used to carry data information or is used as a reserved field for extension.

The frame check sequence (FCS) occupies four bytes, and is parity bits.

An existing standard records five types of MPCP frames, including a gate frame, a report frame, a register_req frame, a register frame, and a register_ack frame. The five types of frames each include the foregoing fields, such as the destination address, the source address, the length/type, the operation code, the timestamp, the data/reserved field, and the frame check sequence, and content of the fields varies with different frames. Opcodes of the five types of frames are respectively 0002, 0003, 0004, 0005, and 0006.

A possible format of the gate MPCP message may be as follows.

**Table 2**

| **Field** | **Length** | **Field meaning** |
|---|---|---|
| DA | 6 byte | MAC-control multicast address or ONU address |
| SA | 6 byte | ONU address |
| L/T | 2 byte | Frame type |
| Opcode | 2 byte | Establishment of a 0×7 channel group |
| Timestamp | 4 byte | Moment at which an MPCP-PDU is sent, that is, a value of a current sending moment (localTime), which is terminated by only an MPCP, and is invisible to an upper layer |
| Number of grants/Flags | 1 byte | Quantity of grants, where when the quantity is zero, it indicates that only the timestamp is transmitted |
| Grant #1 Start time | 4 byte | Start time of a grant 1 |
| Grant #1 Length | 4 byte | Length of the grant 1 |
| Sync Time | 2 byte | Synchronization time, a time required for synchronization by an OLT receiver (including a PMD, a PMA, and a PCS), where during a synchronization period, the ONU sends an idle (idle) code word pair, which is valid in only a discovery gate |
| Discovery Information | 2 byte | Discovery information |
| DWLCHID | 4 byte | Channel identifier of the downstream wavelength channel on which the discovery grant is located |
| ONU Port ID | 1 byte | Port number of the ONU port |
| pad | 8s byte | Padding in remaining parts |
| FCS | 4 byte | Frame check sequence, which is generated at a MAC layer |

S503. The ONU port sends a register request message to the OLT, where the register request message includes a port number of the ONU port.

In a case, each ONU port on the ONU may send a register request message to the OLT. In another case, the ONU selects a default ONU port to perform registration, and only the selected default ONU port sends a register request message to the OLT. In another case, the ONU port that sends the register request may be specified by the OLT. The specified ONU port has previously registered with the OLT, and the OLT may specify, by using the port number of the ONU port that is carried in the gate MPCP message in step S502, the ONU port that needs to send the register request to the OLT.

For ease of recognition by the OLT, when the ONU port sends the register request, the register request message may carry not only the port number of the ONU port, but also an attribute related to the ONU port, for example, a channel identifier of a downstream receiver wavelength channel which the ONU port is currently using, and a rate supported by the ONU port. The following table shows a possible format of the register request (Register_req MPCP) sent by the ONU port.

**Table 3**

| **Field** | **Length** | **Field meaning** |
|---|---|---|
| DA | 6 byte | MAC-control multicast address or ONU address |
| SA | 6 byte | ONU address |
| L/T | 2 byte | Frame type |
| Opcode | 2 byte | Establishment of a 0×7 channel group |
| Timestamp | 4 byte | Moment at which an MPCP-PDU is sent, that is, a value of a current sending moment (localTime), which is terminated by only an MPCP, and is invisible to an upper layer |
| Flags | 1 byte | Marker bit |
| | | When a value is 1, the ONU port attempts to register |
| | | When a value is 3, the ONU port requests to register again, and the OLT unbinds an address and an ONU logical identifier |
| Pending grants | 1 byte | Grants that are about to start, that is, a maximum quantity of grants that are about to start and that can be cached |
| Discovery Information | 2 byte | Discovery information |
| Laser On Time | 1 byte | Time at which a laser is turned on |
| Laser Off Time | 1 byte | Time at which a laser is turned off |
| DWLCHID | 4 byte | Channel identifier of the downstream wavelength channel on which the discovery grant is located |
| ONU Port ID | 1 byte | Port number of the ONU port |
| Line Rate Bitmap | 1 byte | Line rate supported by the ONU port that sends the register request |
| pad | 8s byte | Padding in remaining parts |
| FCS | 4 byte | Frame check sequence, which is generated at a MAC layer |

S504. The ONU port receives a re-calibration request message from the OLT, where the re-calibration request message includes the port number of the ONU port, a channel identifier of an upstream wavelength channel which the ONU port is currently using, a channel identifier of a target upstream wavelength channel that the ONU port needs to obtain by means of calibration, and a channel identifier of a target downstream wavelength channel that the ONU port needs to obtain by means of calibration.

The re-calibration request message may be sent by the OLT to the ONU port when the OLT finds that the ONU port is not located on an expected upstream wavelength channel, and the OLT may send the re-calibration request message to only the ONU port that is not located on the expected upstream wavelength channel.

The following table shows a possible format of the re-calibration request message sent to the ONU port.

**Table 4**

| **Field** | **Length** | **Field meaning** |
|---|---|---|
| DA | 6 byte | MAC-control multicast address or ONU address |
| SA | 6 byte | ONU address |
| L/T | 2 byte | Frame type |
| Opcode | 2 byte | Establishment of a 0×7 channel group |
| Timestamp | 4 byte | Moment at which an MPCP-PDU is sent, that is, a value of a current sending moment (localTime), which is terminated by only an MPCP, and is invisible to an upper layer |
| ONU Port ID | 1 byte | Port number of the ONU port |
| UWLCHID | 4 byte | Channel identifier of the upstream wavelength channel on which the ONU port is located |
| Target DWLCHID | 4 byte | Channel identifier of the target downstream wavelength channel that the ONU port needs to obtain by means of calibration |
| Target UWLCHID | 4 byte | Channel identifier of the target upstream wavelength channel that the ONU port needs to obtain by means of calibration |
| pad | 8s byte | Padding in remaining parts |
| FCS | 4 byte | Frame check sequence, which is generated at a MAC layer |

S505. The ONU port performs calibration according to the channel identifier of the target upstream wavelength channel that the ONU port needs to obtain by means of calibration, and the channel identifier of the target downstream wavelength channel that the ONU port needs to obtain by means of calibration.

The ONU port undergoing re-calibration works on the expected target upstream wavelength channel and target downstream wavelength channel.

S506. The ONU port receives an upstream wavelength adjustment request message from the OLT, where the upstream wavelength adjustment request message includes the port number of the ONU port, an upstream wavelength adjustment direction, and an upstream wavelength adjustment magnitude.

When the OLT finds that the ONU port is located on the expected upstream wavelength channel, but an upstream wavelength of the ONU port is unaligned with a center wavelength of a receiver filter, the OLT sends the upstream wavelength adjustment request to the ONU.

The following table shows a possible format of the upstream wavelength adjustment request message (an MPCP message) sent to the ONU port.

**Table 5**

| **Field** | **Length** | **Field meaning** |
|---|---|---|
| DA | 6 byte | MAC-control multicast address or ONU address |
| SA | 6 byte | ONU address |
| L/T | 2 byte | Frame type |
| Opcode | 2 byte | Establishment of a 0×7 channel group |
| Timestamp | 4 byte | Moment at which an MPCP-PDU is sent, that is, a value of a current sending moment (localTime), which is terminated by only an MPCP, and is invisible to an upper layer |
| ONU Port ID | 1 byte | Port number of the ONU port |
| Adjust Direction | 1 byte | Wavelength adjustment direction |
| | | 0: Reducing a frequency |
| | | 1: Increasing a frequency |
| Adjust Value | 1 byte | Frequency adjustment magnitude, of which a unit is GHz |
| Pad | 8s byte | Padding in remaining parts |
| FCS | 4 byte | Frame check sequence, which is generated at a MAC layer |

S507. The ONU port adjusts the upstream wavelength of the ONU port according to the upstream wavelength adjustment direction and the upstream wavelength adjustment magnitude.

An upstream wavelength of the ONU port that undergoes upstream wavelength adjustment is aligned with the center wavelength of the receiver filter.

It should be noted that wavelength channel re-calibration in step S504 and S505 is triggered when the ONU port is not located on the expected wavelength channel. If the ONU port is located on the expected wavelength channel, the wavelength channel re-calibration step does not need to be performed. Similarly, upstream wavelength adjustment in step S506 and S507 may be triggered only when the upstream wavelength of the ONU port is unaligned with the center wavelength of the receiver filter. If the upstream wavelength of the ONU port is aligned with the center wavelength of the receiver filter, the upstream wavelength adjustment step does not need to be performed.

S508. The ONU port receives a register message from the OLT, where the register message includes the port number of the ONU port and an ONU logical identifier allocated by the OLT to the ONU port.

When the ONU on which the ONU port is located is an ONU in a GPON, the ONU logical identifier may be specifically an ONU ID. When the ONU on which the ONU port is located is an ONU in an EPON, the ONU logical identifier may be specifically an LLID.

The following table shows a possible format of the register message (Register MPCP) received by the ONU port from the OLT.

**Table 6**

| **Field** | **Length** | **Field meaning** |
|---|---|---|
| DA | 6 byte | MAC-control multicast address or ONU address |
| SA | 6 byte | ONU address |
| L/T | 2 byte | Frame type |
| Opcode | 2 byte | Establishment of a 0×7 channel group |
| Timestamp | 4 byte | Moment at which an MPCP-PDU is sent, that is, a value of a current sending moment (localTime), which is terminated by only an MPCP, and is invisible to an upper layer |
| Assigned Port | 2 byte | ONU logical identifier |
| Flags | 1 byte | Marker bit |
| | | When a value is 1, the ONU port attempts to register |
| | | When a value is 3, the ONU port requests to register again, and the OLT unbinds an address and an ONU logical identifier |
| Sync Time | 2 byte | Synchronization time |
| Echoed pending grants | 1 byte | Indicating that the OLT has learned cache space in the ONU |
| Target Laser On Time | 1 byte | Time at which a target laser is turned on |
| Target Laser Off Time | 1 byte | Time at which a target laser is turned off |
| ONU Port ID | 1 byte | Port number of the ONU port |
| Pad | 8s byte | Padding in remaining parts |
| FCS | 4 byte | Frame check sequence, which is generated at a MAC layer |

S509. The ONU port sends a register acknowledgement message to the OLT, where the register acknowledgement message is used to confirm that the ONU port has registered, and the register acknowledgement message carries the port number of the ONU port.

After receiving, from the OLT, the ONU logical identifier allocated to the ONU port, the ONU port may further send a register acknowledgement message to the OLT. The register acknowledgement message is used to instruct the OLT to confirm whether the ONU logical identifier is allocated to the ONU port, and the register acknowledgement message includes the port number of the ONU port.

The following table shows a possible format of the register acknowledgement message (Register_ack MPCP) sent by the ONU port to the OLT.

**Table 7**

| **Field** | **Length** | **Field meaning** |
|---|---|---|
| DA | 6 byte | MAC-control multicast address or ONU address |
| SA | 6 byte | ONU address |
| L/T | 2 byte | Frame type |
| Opcode | 2 byte | Establishment of a 0×7 channel group |
| Timestamp | 4 byte | Moment at which an MPCP-PDU is sent, that is, a value of a current sending moment (localTime), which is terminated by only an MPCP, and is invisible to an upper layer |
| Flags | 1 byte | Marker bit |
| Echoed Assigned Port | 2 byte | Copy of a specified port to which an identifier is allocated during registration |
| Echoed Sync Time | 2 byte | Copy of registered data |
| ONU Port ID | 1 Byte | Port number of the ONU port |
| Pad | 8s byte | Padding in remaining parts |
| FCS | 4 byte | Frame check sequence, which is generated at a MAC layer |

In this embodiment of the present invention, the ONU port receives the discovery grant from the OLT, sends the register request to the OLT, and receives, from the OLT, the ONU logical identifier allocated to the ONU port. This provides an efficient ONU registration mechanism, so that the ONU can support more bandwidth channels, and a bandwidth is increased.

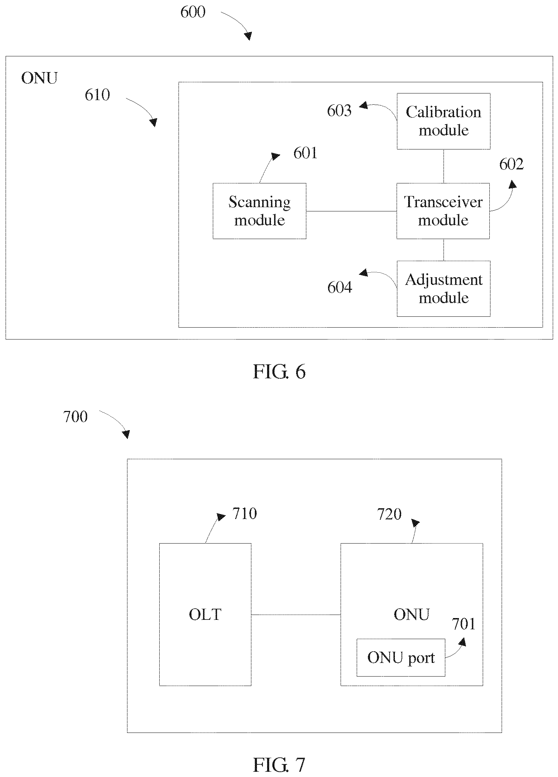

FIG. 6 is a structural diagram of an ONU 600 according to an embodiment of the present invention. The ONU 600 includes an ONU port 610, and the ONU 600 may include a plurality of ONU ports. The ONU port 610 is one of the plurality of ports on the ONU, and the ONU port 610 includes:
a scanning module 601, configured to scan a downstream wavelength channel; and
a transceiver module 602, configured to: receive a discovery grant message from an optical line terminal OLT, where the discovery grant message includes a channel identifier of a downstream wavelength channel on which the discovery grant message is being transmitted;
send a register request message to the OLT, where the register request message includes a port number of the ONU port; and
receive a register message from the OLT, where the register message includes the port number of the ONU port and an ONU logical identifier allocated by the OLT to the ONU port.

The transceiver module 602 may further be configured to: send a register acknowledgement message to the OLT, where the register acknowledgement message is used to confirm that the ONU port has registered, and the register acknowledgement message carries the port number of the ONU port.

Herein, a function of the scanning module may be specifically implemented by a processor, and a function of the transceiver module may be specifically implemented by a transceiver.

When the ONU on which the ONU port is located is an ONU in a GPON, the ONU logical identifier may be specifically an ONU ID. When the ONU on which the ONU port is located is an ONU in an EPON, the ONU logical identifier may be specifically an LLID.

The ONU port 610 may further include a calibration module 603, and when the ONU port 610 is not located on an expected wavelength channel, the transceiver module 602 may further be configured to: receive a re-calibration request message from the OLT, where the re-calibration request message includes the port number of the ONU port 610, a channel identifier of an upstream wavelength channel on which the ONU port 610 is currently located, a channel identifier of a target upstream wavelength channel that the ONU port 610 needs to obtain by means of calibration, and a channel identifier of a target downstream wavelength channel that the ONU port 610 needs to obtain by means of calibration; and the calibration module 603 is configured to perform calibration according to the channel identifier of the target upstream wavelength channel that the ONU port 610 needs to obtain by means of calibration, and the channel identifier of the target downstream wavelength channel that the ONU port 610 needs to obtain by means of calibration.

The ONU port 610 further includes an adjustment module 604. When the ONU port 610 is located on an expected upstream wavelength channel, but an upstream wavelength of the ONU port 610 is unaligned with a center wavelength of a receiver filter, the transceiver module 602 is further configured to: receive an upstream wavelength adjustment request message from the OLT, where the upstream wavelength adjustment request message includes the port number of the ONU port 610, an upstream wavelength adjustment direction, and an upstream wavelength adjustment magnitude; and the adjustment module 604 is configured to adjust the upstream wavelength of the ONU port 610 according to the upstream wavelength adjustment direction and the upstream wavelength adjustment magnitude.

FIG. 7 is a structural diagram of a PON system according to an embodiment of the present invention. The system includes an OLT 710 and an ONU 720. The ONU 720 includes an ONU port, the ONU port is one of a plurality of ports on the ONU, and the ONU port 701 is configured to: scan a downstream wavelength channel; receive a discovery grant message from the OLT 710, where the discovery grant message includes a channel identifier of a downstream wavelength channel on which the discovery grant message is being transmitted; send a register request message to the OLT 710, where the register request message includes a port number of the ONU port 701; and receive a register message from the OLT 710, where the register message includes the port number of the ONU port 701 and an ONU logical identifier allocated by the OLT 710 to the ONU port 701.

The ONU port 701 may further be configured to send a register acknowledgement message to the OLT 710, where the register acknowledgement message is used to confirm that the ONU port 701 has registered, and the register acknowledgement message carries the port number of the ONU port 701.

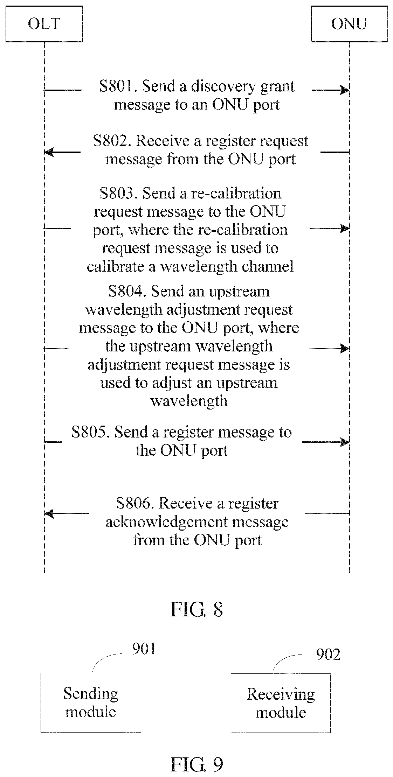

FIG. 8 is a flowchart of an ONU port registration method according to another embodiment of the present invention. An ONU port registration process includes the following steps.

S801. Send a discovery grant message to an ONU port, where the discovery grant message includes a channel identifier of a downstream wavelength channel on which the discovery grant message is being transmitted, and the ONU port is one of a plurality of ports on an ONU.

In this embodiment of the present invention, an OLT sends the discovery grant message to the ONU port. A message exchanged between the ONU port and the OLT may be a message based on a Multi-Point Control Protocol (Multiple Point Control Protocol, MPCP), or may be a message based on operation, administration and maintenance (Operation Administration Maintenance, OAM), or may be a message based on physical layer operation, administration and maintenance (Physical Layer Operation Administration Maintenance, PLOAM), or may be a message based on an operation management control interface (Operation Management Control Interface, OMCI), or has a self-defined message format. Herein, the discovery grant message sent by the OLT to the ONU port may be specifically a gate MPCP message. The gate MPCP message may include not only the channel identifier of the downstream wavelength channel, but also a port number of the ONU port.

S802. Receive a register request message from the ONU port, where the register request message includes a port number of the ONU port.

In a case, an OLT may receive a register request message from each ONU port on the ONU. In another case, the ONU selects a default ONU port to perform registration, and the OLT receives a register request message from the selected default ONU port. In another case, the ONU port that sends the register request may be specified by the OLT. The specified ONU port has previously registered with the OLT, and the OLT may specify, by using the port number of the ONU port that is carried in the gate MPCP message in step S502, the ONU port that needs to send the register request to the OLT.

For ease of recognition by the OLT, when the ONU port sends the register request, the register request message may carry not only the port number of the ONU port, but also an attribute related to the ONU port, for example, a channel identifier of a downstream receiver wavelength channel which the ONU port is currently using, and a rate supported by the ONU port.

S803. Send a re-calibration request message to the ONU port, where the re-calibration request message includes the port number of the ONU port, a channel identifier of an upstream wavelength channel which the ONU port is currently using, a channel identifier of a target upstream wavelength channel that the ONU port needs to obtain by means of calibration, and a channel identifier of a target downstream wavelength channel that the ONU port needs to obtain by means of calibration, and the channel identifier of the target upstream wavelength channel and the channel identifier of the target downstream wavelength channel are used to calibrate the ONU port.

S804. Send an upstream wavelength adjustment request message to the ONU port, where the upstream wavelength adjustment request message includes the port number of the ONU port, an upstream wavelength adjustment direction, and an upstream wavelength adjustment magnitude, and the upstream wavelength adjustment direction and the upstream wavelength adjustment magnitude are used to adjust an upstream wavelength of the ONU port.

When the OLT finds that the ONU port is located on the expected upstream wavelength channel, but an upstream wavelength of the ONU port is unaligned with a center wavelength of a receiver filter, the OLT sends the upstream wavelength adjustment request to the ONU.

It should be noted that wavelength channel re-calibration in step S803 is triggered when the ONU port is not located on the expected wavelength channel. If the ONU port is located on the expected wavelength channel, the wavelength channel re-calibration step does not need to be performed. Similarly, upstream wavelength adjustment in step S804 may be triggered only when the upstream wavelength of the ONU port is unaligned with the center wavelength of the receiver filter. If the upstream wavelength of the ONU port is aligned with the center wavelength of the receiver filter, the upstream wavelength adjustment step does not need to be performed.

S805. Send a register message to the ONU port, where the register message includes the port number of the ONU port and an ONU logical identifier allocated by the OLT to the ONU port.

S806. Receive a register acknowledgement message from the ONU port, where the register acknowledgement message is used to confirm that the ONU port has registered, and the register acknowledgement message carries the port number of the ONU port.

After receiving, from the OLT, the ONU logical identifier allocated to the ONU port, the ONU port may further send a register acknowledgement message to the OLT. The register acknowledgement message is used to instruct the OLT to confirm whether the ONU logical identifier is allocated to the ONU port, and the register acknowledgement message includes the port number of the ONU port.

When the ONU on which the ONU port is located is an ONU in a GPON, the ONU logical identifier may be specifically an ONU ID. When the ONU on which the ONU port is located is an ONU in an EPON, the ONU logical identifier may be specifically an LLID.

In this embodiment of the present invention, the ONU port receives the discovery grant from the OLT, sends the register request to the OLT, and receives, from the OLT, the ONU logical identifier allocated to the ONU port. This provides an efficient ONU registration mechanism, so that the ONU can support more bandwidth channels, and a bandwidth is increased.

FIG. 9 shows a passive optical network device according to an embodiment of the present invention, including:
a sending module 901, configured to send a discovery grant message to an ONU port, where the discovery grant message includes a channel identifier of a downstream wavelength channel on which the discovery grant message is being transmitted, and the ONU port is one of a plurality of ports on an ONU; and
a receiving module 902, configured to receive a register request message from the ONU port, where the register request message includes a port number of the ONU port.

The sending module 901 is further configured to send a register message to the ONU port, where the register message includes the port number of the ONU port and an ONU logical identifier allocated to the ONU port.

The receiving module 902 may further be configured to: receive a register acknowledgement message sent by the ONU port, where the register acknowledgement message is used to confirm that the ONU port has registered, and the register acknowledgement message carries the port number of the ONU port.

If the ONU port is not located on an expected wavelength channel, the sending module 901 may further be configured to: send a re-calibration request message to the ONU port, where the re-calibration request message includes the port number of the ONU port, a channel identifier of an upstream wavelength channel which the ONU port is currently using, a channel identifier of a target upstream wavelength channel that the ONU port needs to obtain by means of calibration, and a channel identifier of a target downstream wavelength channel that the ONU port needs to obtain by means of calibration, and the channel identifier of the target upstream wavelength channel and the channel identifier of the target downstream wavelength channel are used to calibrate the ONU port.

If the ONU port is located on an expected upstream wavelength channel, but an upstream wavelength of the ONU port is unaligned with a center wavelength of a receiver filter, the sending module 901 may further be configured to: send an upstream wavelength adjustment request message to the ONU port, where the upstream wavelength adjustment request message includes the port number of the ONU port, an upstream wavelength adjustment direction, and an upstream wavelength adjustment magnitude, and the upstream wavelength adjustment direction and the upstream wavelength adjustment magnitude are used to adjust the upstream wavelength of the ONU port.

Herein, the sending module 901 may be a transmitter, the receiving module 902 may be a receiver, and the transmitter and the receiver may form a transceiver.

In this embodiment of the present invention, the ONU port receives the discovery grant from an OLT, sends the register request to the OLT, and receives, from the OLT, the ONU logical identifier allocated to the ONU port. This provides an efficient ONU registration mechanism, to perform ONU management and maintenance at a granularity of an ONU port, so that the ONU can support more bandwidth channels, and a bandwidth is increased.

A person of ordinary skill in the art may understand that, each aspect of the present invention or a possible implementation of each aspect may be specifically implemented as a system, a method, or a computer program product. Therefore, each aspect of the present invention or a possible implementation of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation of each aspect may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may actually be executed substantially at the same time, or these blocks may sometimes be executed in reverse order.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof. Therefore, the protection scope of the present invention shall be subject to the protection scope of the claims.

## Claims

1. An optical network unit ONU registration method, wherein the method comprises:
scanning, by an ONU port, a downstream wavelength channel, wherein the ONU port is one of a plurality of ports on an ONU;
receiving, by the ONU port, a discovery grant message from an optical line terminal OLT, wherein the discovery grant message comprises a channel identifier of a downstream wavelength channel on which the discovery grant message is being transmitted;
sending, by the ONU port, a register request message to the OLT, wherein the register request message comprises a port number of the ONU port; and
receiving, by the ONU port, a register message from the OLT, wherein the register message comprises the port number of the ONU port and an ONU logical identifier allocated by the OLT to the ONU port.

2. The method according to claim 1, further comprising:
sending, by the ONU port, a register acknowledgement message to the OLT, wherein the register acknowledgement message is used to confirm that the ONU port has registered, and the register acknowledgement message carries the port number of the ONU port.

3. The method according to claim 1 or 2, wherein the register request message sent by the ONU port to the OLT further comprises a channel identifier of a downstream receiver wavelength channel on which the ONU port is located, and a line rate supported by the ONU port.

4. The method according to claim 1 or 2, wherein when the ONU port is not located on an expected wavelength channel, the method further comprises:
receiving, by the ONU port, a re-calibration request message from the OLT, wherein the re-calibration request message comprises the port number of the ONU port, a channel identifier of an upstream wavelength channel which the ONU port is currently using, a channel identifier of a target upstream wavelength channel that the ONU port needs to obtain by means of calibration, and a channel identifier of a target downstream wavelength channel that the ONU port needs to obtain by means of calibration; and
performing, by the ONU port, calibration according to the channel identifier of the target upstream wavelength channel that the ONU port needs to obtain by means of calibration, and the channel identifier of the target downstream wavelength channel that the ONU port needs to obtain by means of calibration.

5. The method according to claim 1 or 2, wherein when the ONU port is located on an expected upstream wavelength channel, but an upstream wavelength of the ONU port is unaligned with a center wavelength of a receiver filter, the method further comprises:
receiving, by the ONU port, an upstream wavelength adjustment request message from the OLT, wherein the upstream wavelength adjustment request message comprises the port number of the ONU port, an upstream wavelength adjustment direction, and an upstream wavelength adjustment magnitude; and
adjusting, by the ONU port, the upstream wavelength of the ONU port according to the upstream wavelength adjustment direction and the upstream wavelength adjustment magnitude.

6. The method according to any one of claims 1 to 5, wherein the ONU logical identifier allocated by the OLT to the ONU port is different from an ONU logical identifier of another port on the ONU.

7. The method according to claim 1 or 2, wherein
the discovery grant message further comprises the port number of the ONU port, and the port number comprised in the discovery grant message is used to instruct the ONU port to perform registration; and
before the sending, by the ONU port, a register request message to the OLT, the method further comprises: confirming, by the ONU port, that the port number of the ONU port is comprised in the discovery grant message.

8. The method according to any one of claims 1 to 7, wherein the ONU on which the ONU port is located is an ONU in a gigabyte passive optical network GPON, and the ONU logical identifier is specifically an ONU identifier ID.

9. The method according to any one of claims 1 to 7, wherein the ONU on which the ONU port is located is an ONU in an Ethernet passive optical network EPON, and the ONU logical identifier is specifically a logical link identifier LLID.

10. The method according to any one of claims 1 to 7, wherein the ONU stores a correspondence between the channel identifier of the downstream wavelength channel and the channel identifier of the upstream wavelength channel, the downstream wavelength channel and the upstream wavelength channel form a wavelength channel group, and the sending, by the ONU port, a register request message to the OLT comprises: sending, by the ONU port, the register request message to the OLT by using the upstream wavelength channel.

11. An optical network unit ONU registration method, comprising:
sending a discovery grant message to an ONU port, wherein the discovery grant message comprises a channel identifier of a downstream wavelength channel on which the discovery grant message is being transmitted, and the ONU port is one of a plurality of ports on an ONU;
receiving a register request message from the ONU port, wherein the register request message comprises a port number of the ONU port; and
sending a register message to the ONU port, wherein the register message comprises the port number of the ONU port and an ONU logical identifier allocated to the ONU port.

12. The method according to claim 11, further comprising:
receiving a register acknowledgement message sent by the ONU port, wherein the register acknowledgement message is used to confirm that the ONU port has registered, and the register acknowledgement message carries the port number of the ONU port.

13. The method according to claim 11 or 12, wherein the register request message received from the ONU port further comprises a channel identifier of a downstream receiver wavelength channel on which the ONU port is located, and a line rate supported by the ONU port.

14. The method according to claim 11 or 12, wherein when the ONU port is not located on an expected wavelength channel, the method further comprises:
sending a re-calibration request message to the ONU port, wherein the re-calibration request message comprises the port number of the ONU port, a channel identifier of an upstream wavelength channel which the ONU port is currently using, a channel identifier of a target upstream wavelength channel that the ONU port needs to obtain by means of calibration, and a channel identifier of a target downstream wavelength channel that the ONU port needs to obtain by means of calibration, and the channel identifier of the target upstream wavelength channel and the channel identifier of the target downstream wavelength channel are used to calibrate the ONU port.

15. The method according to claim 11 or 12, wherein when the ONU port is located on an expected upstream wavelength channel, but an upstream wavelength of the ONU port is unaligned with a center wavelength of a receiver filter, the method further comprises:
sending an upstream wavelength adjustment request message to the ONU port, wherein the upstream wavelength adjustment request message comprises the port number of the ONU port, an upstream wavelength adjustment direction, and an upstream wavelength adjustment magnitude, and the upstream wavelength adjustment direction and the upstream wavelength adjustment magnitude are used to adjust the upstream wavelength of the ONU port.

16. The method according to any one of claims 11 to 15, wherein the ONU logical identifier allocated to the ONU port is different from an ONU logical identifier of another port on the ONU.

17. The method according to any one of claims 11 to 16, wherein the ONU on which the ONU port is located is an ONU in a gigabyte passive optical network GPON, and the ONU logical identifier is specifically an ONU identifier ID.

18. The method according to any one of claims 11 to 16, wherein the ONU on which the ONU port is located is an ONU in an Ethernet passive optical network EPON, and the ONU logical identifier is specifically a logical link identifier LLID.

19. An optical network unit ONU, comprising an ONU port, wherein the ONU port is one of a plurality of ports on the ONU, and the ONU port comprises:
a scanning module, configured to scan a downstream wavelength channel; and
a transceiver module, configured to: receive a discovery grant message from an optical line terminal OLT, wherein the discovery grant message comprises a channel identifier of a downstream wavelength channel on which the discovery grant message is being transmitted; send a register request message to the OLT, wherein the register request message comprises a port number of the ONU port; and receive a register message from the OLT, wherein the register message comprises the port number of the ONU port and an ONU logical identifier allocated by the OLT to the ONU port.

20. The ONU according to claim 19, wherein the transceiver module is further configured to:
send a register acknowledgement message to the OLT, wherein the register acknowledgement message is used to confirm that the ONU port has registered, and the register acknowledgement message carries the port number of the ONU port.

21. The ONU according to claim 19 or 20, wherein the ONU port further comprises a calibration module, and when the ONU port is not located on an expected wavelength channel, the transceiver module is further configured to:
receive a re-calibration request message from the OLT, wherein the re-calibration request message comprises the port number of the ONU port, a channel identifier of an upstream wavelength channel which the ONU port is currently using, a channel identifier of a target upstream wavelength channel that the ONU port needs to obtain by means of calibration, and a channel identifier of a target downstream wavelength channel that the ONU port needs to obtain by means of calibration; and
the calibration module is configured to perform calibration according to the channel identifier of the target upstream wavelength channel that the ONU port needs to obtain by means of calibration, and the channel identifier of the target downstream wavelength channel that the ONU port needs to obtain by means of calibration.

22. The ONU according to claim 19 or 20, wherein the ONU port further comprises an adjustment module, and when the ONU port is located on an expected upstream wavelength channel, but an upstream wavelength of the ONU port is unaligned with a center wavelength of a receiver filter, the transceiver module is further configured to:
receive an upstream wavelength adjustment request message from the OLT, wherein the upstream wavelength adjustment request message comprises the port number of the ONU port, an upstream wavelength adjustment direction, and an upstream wavelength adjustment magnitude; and
the adjustment module is configured to adjust the upstream wavelength of the ONU port according to the upstream wavelength adjustment direction and the upstream wavelength adjustment magnitude.

23. A passive optical network device, comprising:
a sending module, configured to send a discovery grant message to an ONU port, wherein the discovery grant message comprises a channel identifier of a downstream wavelength channel on which the discovery grant message is being transmitted, and the ONU port is one of a plurality of ports on an ONU; and
a receiving module, configured to receive a register request message from the ONU port, wherein the register request message comprises a port number of the ONU port, wherein
the sending module is further configured to send a register message to the ONU port, wherein the register message comprises the port number of the ONU port and an ONU logical identifier allocated to the ONU port.

24. The passive optical network device according to claim 23, wherein the receiving module is further configured to:
receive a register acknowledgement message sent by the ONU port, wherein the register acknowledgement message is used to confirm that the ONU port has registered, and the register acknowledgement message carries the port number of the ONU port.

25. A passive optical network PON system, wherein the system comprises an optical line terminal OLT and an optical network unit ONU, the ONU comprises an ONU port, the ONU port is one of a plurality of ports on the ONU, and the ONU port is configured to:
scan a downstream wavelength channel;
receive a discovery grant message from the OLT, wherein the discovery grant message comprises a channel identifier of a downstream wavelength channel on which the discovery grant message is being transmitted;
send a register request message to the OLT, wherein the register request message comprises a port number of the ONU port; and
receive a register message from the OLT, wherein the register message comprises the port number of the ONU port and an ONU logical identifier allocated by the OLT to the ONU port.

26. The PON system according to claim 25, wherein the ONU port is further configured to:
send a register acknowledgement message to the OLT, wherein the register acknowledgement message is used to confirm that the ONU port has registered, and the register acknowledgement message carries the port number of the ONU port.
